# FASCICULE DE BREVET EUROPEEN

(11) **EP 4 642 608 B1**
(45) Date de publication et mention de la délivrance du brevet: **11.11.2026**
(21) Numéro de dépôt: 23837199.1
(22) Date de dépôt: 19.12.2023
(51) Int. Cl.: B29C 49/42, B29C 49/06, B29C 49/36, B29C 49/68, B29K 67/00, B29L 31/00

(54) **DISPOSITIF DE MONTAGE ET/OU DE DÉMONTAGE DE NEZ DE TOURNETTE ET APPLICATION À UNE UNITÉ DE CONDITIONNEMENT THERMIQUE DE PRÉFORMES**
VORRICHTUNG ZUR MONTAGE UND/ODER DEMONTAGE EINER SCHLEUDERNASE UND ANWENDUNG BEI EINER VORFORM-KLIMAANLAGE
DEVICE FOR MOUNTING AND/OR DISASSEMBLING A SPINNER NOSE, AND APPLICATION TO A PREFORM THERMAL CONDITIONING UNIT

(30) Priorité: 30.12.2022 FR 2214682
(43) Date de publication de la demande: 05.11.2025
(73) Titulaire: Sidel Participations, 76930 Octeville-sur-Mer (FR)
(72) Inventeur: MICHEL, Jocelyn, 76930 OCTEVILLE-SUR-MER (FR)
(74) Mandataire: Sidel Group
(86) Numéro de dépôt international: PCT/EP2023/086689
(87) Numéro de publication internationale: WO 2024/141340

(56) Documents cités:
- EP-B1- 1 880 825
- WO-A1-2020/128378
- GB-A- 926 589
- US-A1- 2020 290 261

## Description

### Domaine technique de l'invention

L'invention concerne un dispositif pour le transport et la préhension d'une préforme tubulaire avec rotation de la préforme autour de son axe principal, plus particulièrement dans une unité de conditionnement thermique, ainsi qu'une pince apte et destinée à être solidarisée sur un bras robotisé et à coopérer avec un dispositif de convoyage. Un autre objet de l'invention concerne un procédé de montage et/ou de démontage d'au moins un nez de tournette d'un dispositif de convoyage. De tels dispositifs et procédés selon l'art antérieur sont décrits dans les documents US2020/290261A1, WO2020/128378A1, EP1880825B1 et GB926589A.

### Etat de la technique

L'invention se rapporte au domaine de la fabrication de corps creux en matériau thermoplastique, fabrication pour laquelle on réalise d'abord une préforme par injection. La préforme est ensuite formée en récipient dans une installation de fabrication de récipients.

Pour ce faire, l'installation de fabrication de récipients comprend une unité de conditionnement thermique appelée également four, dans laquelle la préforme est conditionnée thermiquement et une unité de soufflage pour obtenir le récipient final où la préforme est formée par une opération de soufflage ou par des opérations d'étirage soufflage.

On entend par « corps creux » une préforme de récipient, ou encore un récipient final, ou éventuellement un récipient intermédiaire, c'est-à-dire tout type de corps creux comportant un corps depuis lequel s'étend un col tubulaire débouchant. Dans la suite du document, il sera utilisé de préférence et de manière non limitative, le terme préforme.

La préforme présente généralement un corps cylindrique tubulaire qui est fermé à l'une de ses extrémités axiales et qui est prolongé à son autre extrémité par un col, lui aussi tubulaire.

Le col s'étend axialement depuis une collerette principale annulaire qui est agencée à la jonction du col et du corps de la préforme, jusqu'à une lèvre annulaire aussi appelée buvant, qui délimite une ouverture axiale du col.

Le corps de la préforme est appelé à subir une déformation plastique pour former le récipient final lors de l'opération de soufflage. Pour pouvoir procéder à cette opération de soufflage, il est nécessaire que le corps de la préforme soit porté à une température supérieure à la température de transition vitreuse du matériau. A cet effet, on procède à un conditionnement thermique de la préforme en la faisant circuler à l'intérieur d'un four, au moyen d'un dispositif de convoyage suivant un trajet de chauffage. Le four comporte des moyens de chauffage qui sont par exemple constitués par des lampes à infrarouge ou des diodes laser devant lesquelles les préformes se déplacent grâce au dispositif de convoyage.

Lors de son déplacement dans le four, la préforme est avantageusement entraînée en rotation autour de son axe principal afin d'homogénéiser le chauffage.

Les préformes sont généralement maintenues sur le dispositif de convoyage par des moyens de préhension.

La préforme est transférée, ou chargée, à l'entrée du four par des moyens de transfert de la préforme depuis un dispositif d'alimentation en préformes jusqu'au dispositif de convoyage.

L'opération consistant à saisir, par les dispositifs de préhension une préforme, est appelée « vêtissage ».

De la même manière, à la sortie du four, l'opération consistant à décharger la préforme chauffée des dispositifs de préhension, est appelée « dévêtissage ». Traditionnellement, les dispositifs de transport saisissent les préformes par la face interne du col grâce aux moyens de préhension. Les moyens de préhension sont alors animés d'un mouvement vertical de descente selon l'axe principal de la préforme par rapport au moyen de transfert afin de permettre l'insertion des moyens de préhension dans le col. A cet effet, les dispositifs de transports circulent au-dessus des moyens de transfert.

A l'inverse, les préformes sont désolidarisées du dispositif de convoyage grâce à l'appui d'une face d'éjection de l'éjecteur sur le buvant de la préforme et la remontée du moyen de préhension selon l'axe principal de la préforme par rapport au moyen de transfert afin de permettre la séparation des moyens de préhension du col.

La trajectoire d'une préforme portée par les moyens de transfert est généralement tangente avec la trajectoire des dispositifs de transport en un point ou, au mieux, les deux trajectoires sont superposées sur une courte distance. Cette zone de superposition en un point ou sur une courte distance est appelée par la suite "zone de vêtissage".

Pour que l'opération de vêtissage puisse avoir lieu, les moyens de préhension doivent être synchronisés avec les moyens de transfert pour que les moyens de préhension soient actionnés exactement au droit de la zone de vêtissage.

De même, pour que l'opération de dévêtissage puisse avoir lieu, les moyens de préhension doivent être synchronisés avec les moyens de transfert pour que les moyens de préhension soient actionnés exactement au droit de la zone de dévêtissage.

De tels moyens de préhension sont bien connus. C'est le cas, notamment, du brevet européen EP0935572 qui décrit un dispositif pour le transport et la préhension de préformes.

Ledit dispositif de convoyage comporte :
- un support d'axe vertical ;
- un mandrin d'axe monté pivot glissant par rapport au support d'axe vertical dont ledit axe vertical est coaxial à l'axe du mandrin ;
- une tournette montée sur une extrémité du mandrin, et qui comprend :
   - un nez de tournette fixé à l'une des extrémités du mandrin de manière démontable et susceptible de saisir une préforme.

En variante, la tournette comprend :
- un nez de tournette fixé à l'une des extrémités du mandrin de manière démontable et susceptible de saisir une préforme et
- un éjecteur entourant au moins partiellement le nez de tournette, est solidarisé au support d'axe vertical par un moyen de fixation et susceptible d'éjecter une préforme.

Une même installation doit pouvoir convenir à la fabrication de récipients de différents modèles, et notamment de différentes capacités. Un modèle donné de préforme peut convenir à plusieurs modèles de récipients, mais pas à tous. Aussi le four doit-il pouvoir assurer la chauffe de différents modèles de préformes.

Les préformes ne se distinguent pas seulement par les formes (et tailles) de leur corps : il arrive également qu'elles aient des cols de diamètres différents.

On conçoit donc aisément qu'il est alors nécessaire de remplacer chaque nez de tournette par un autre, d'un diamètre adapté au nouveau modèle de préforme à chauffer.

Le nez de tournette est ordinairement fixé sur le mandrin au moyen d'un montage du type baïonnette. Ce montage se présente couramment sous forme d'une douille à baïonnette. Celle-ci comprend une rainure s'étendant parallèlement à l'axe longitudinal du mandrin et dans laquelle s'engage une goupille solidaire du nez de tournette. Pour démonter le nez de tournette, il convient de désengager la goupille de la douille.

Cependant, l'opération pour le démontage d'un jeu de nez de tournette demeure assez long. En effet, pour un changement de format, il est nécessaire de démontrer tous les nez de tournette de l'unité de conditionnement thermique. Par conséquent, pour une unité de conditionnement thermique ayant deux cents nez de tournette, il faut quatre heures pour un opérateur expérimenté pour faire ce changement.

### Résumé de l'invention

L'invention propose, selon un premier objet, un dispositif pour le verrouillage et/ou le déverrouillage d'au moins un nez de tournette, destiné à être monté sur une unité de conditionnement thermique comportant au moins :
- un bâti ;
- un dispositif de convoyage de préformes comportant un support, le dispositif de convoyage circulant le long du bâti selon une trajectoire (T) prédéterminée ;
- un mandrin monté mobiles en rotation autour de son axe longitudinal, sur le support du dispositif de convoyage,
chaque mandrin comprenant au moins :
- une première extrémité munie d'un moyen de fixation solidarisant le nez de tournette au mandrin, ledit nez de tournette étant apte à recevoir la préforme en matière plastique ;
- une autre portion du mandrin, opposée à ladite première extrémité, solidarisée à un organe d'entraînement pour mettre en rotation ledit mandrin, le dispositif pour le verrouillage et/ou le déverrouillage selon l'invention est caractérisé en ce qu'il comprend en outre :
   - un moyen de blocage en rotation de chaque nez de tournette, et
   - un moyen de verrouillage et/ou déverrouillage dudit moyen de fixation solidarisant le nez de tournette au mandrin de manière à verrouiller et/ou à déverrouiller le nez de tournette 64 du mandrin 60.

Selon un autre aspect de l'invention, le moyen de fixation comprend une partie mâle solidaire dudit nez de tournette et une partie femelle solidaire du mandrin, la partie mâle présente un filetage à l'une de ces extrémités et la partie femelle comprend un taraudage fileté complémentaire au filetage de la partie mâle.

Selon un autre aspect de l'invention, ledit moyen de fixation comprend une partie femelle solidaire du nez de tournette et une partie male solidaire du mandrin, la partie mâle présente un filetage à l'une de ses extrémités, la partie femelle comprend un taraudage fileté complémentaire au filetage de la partie mâle.

Selon un autre aspect de l'invention, le moyen de verrouillage et/ou déverrouillage étant solidarisé au bâti de l'unité de conditionnement thermique.

Selon un autre aspect de l'invention, le moyen de blocage comprend une pince constituée de deux branches, mobiles l'une par rapport à l'autre, chaque branche étant munie à son extrémité libre d'un mors apte à saisir le nez de tournette pour l'immobiliser en rotation.

Selon un autre aspect de l'invention, au moins une branche de la pince est entrainée par un actionneur.

Selon un autre aspect de l'invention, ledit moyen de blocage comprend un vérin constitué d'un corps fixé au bâti et d'un piston apte à être déplacé pour prendre appui sur le nez de tournette pour l'immobiliser en rotation.

Selon un autre aspect de l'invention, le moyen de verrouillage et/ou de déverrouillage comporte un second actionneur muni d'un organe de déverrouillage et/ou verrouillage du moyen de fixation destiné à coopérer avec l'organe d'entraînement pour mettre en rotation le mandrin et ainsi déverrouiller et/ou verrouiller le moyen de fixation.

Selon un autre aspect de l'invention, l'organe de verrouillage et/ou de déverrouillage comprend au moins une roue se trouvant dans un plan horizontal comportant à sa périphérie des doigts espacés d'un certain pas.

Selon un autre aspect de l'invention, le pas entre chaque doigt se définit de façon que les doigts s'insèrent entre chaque dent dudit organe d'entraînement solidaire en rotation à l'une des extrémités libres du mandrin.

L'invention propose, selon un second objet, une unité de conditionnement thermique de préformes.

L'unité de conditionnement thermique de préformes selon l'invention est caractérisée en ce qu'elle comprend un dispositif pour le verrouillage et/ou le déverrouillage d'au moins un nez de tournette selon l'un quelconque des aspects précédents de l'invention, solidarisé au bâti de l'unité de conditionnement thermique de préformes.

Selon un autre aspect de l'invention, au moins un premier actionneur apte à déplacer ledit moyen de verrouillage et/ou de déverrouillage depuis une position dite active dans laquelle le moyen de verrouillage et/ou de déverrouillage s'étend sur la trajectoire T jusqu'à une position dite inactive dans laquelle le moyen de verrouillage et/ou de déverrouillage ne s'étend pas sur la trajectoire T et inversement.

L'invention propose, selon un troisième objet, un procédé pour le verrouillage et/ou le déverrouillage du nez de tournette d'une unité de conditionnement thermique selon l'un quelconque des aspects précédents de l'invention comportant au moins les étapes suivantes de :
- blocage de nez de tournette ;
- mise en rotation du mandrin pour engager et désengager le moyen de fixation solidarisant le nez de tournette avec le mandrin.

### Brève description des figures

D'autres caractéristiques et avantages de l'invention apparaitront au cours de la lecture de la description détaillée qui va suivre pour la compréhension de laquelle on se reportera aux dessins annexés que nous décrivons brièvement par la suite.
[Fig. 1] est une vue générale schématique d'une installation de production de récipients vu de dessus ;
[Fig. 2] est une vue de détail du médaillon de la figure 1 représentant une préforme ; [Fig. 3] est une vue d'ensemble d'un dispositif de convoyage ;
[Fig. 4] est une vue schématique représentant un mode de fixation solidarisant un mandrin et un nez de tournette ;
[Fig. 5] est une vue en coupe en position verrouillée d'un moyen de fixation par vissage solidarisant un mandrin au nez de tournette ;
[Fig. 6] est une vue en coupe en position libérée d'un moyen de fixation par vissage solidarisant un mandrin au nez de tournette ;
[Fig. 7] est une vue d'ensemble du dispositif pour le verrouillage et/ou le déverrouillage d'un nez de tournette en position de production ;
[Fig. 8], est une vue d'ensemble du dispositif pour le verrouillage et/ou le déverrouillage d'un nez de tournette en position de libération ;

### Description détaillée de l'invention

Dans la suite de la description, des éléments présentant une structure identique ou des fonctions analogues seront désignés par une même référence.

On adoptera à titre non limitatif les orientations longitudinale, verticale et transversale en référence au trièdre (L, V, T) représenté sur les figures.

Par convention, les directions longitudinale et transversale sont déterminées de manière fixe par rapport aux dispositifs de moulage de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

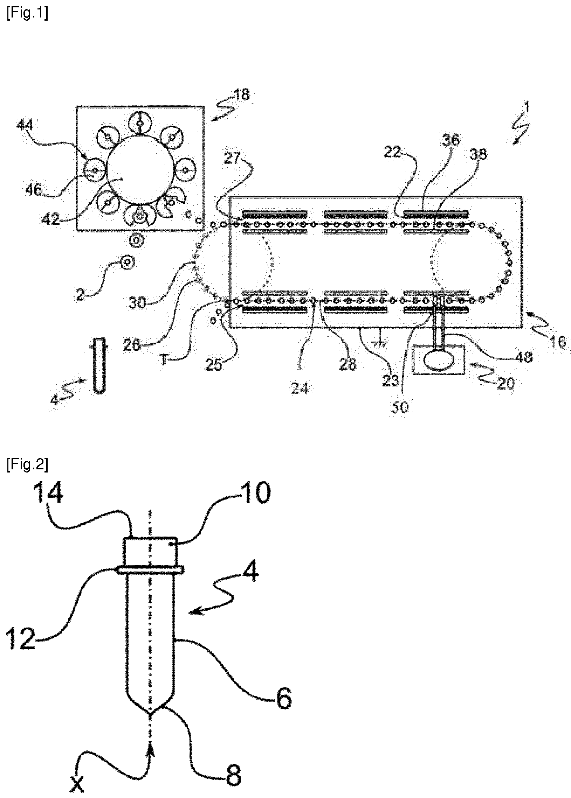

On a représenté schématiquement à la figure 1, une installation 1 de production en série de récipients 2 en matériau thermoplastique à partir de préformes 4.

Dans la suite de la description, les préformes 4 et les récipients 2 se déplacent dans l'installation de production le long d'un trajet de circulation depuis l'amont vers l'aval.

Les préformes 4 sont déplacées en file le long d'un trajet de chauffe par des moyens de convoyage qui seront détaillés par la suite.

De manière non limitative, les récipients sont ici des bouteilles. Le matériau thermoplastique est par exemple ici formé par du polyéthylène téréphtalate, désigné par la suite sous son acronyme "PET".

Une telle préforme 4, en référence à la figure 2, présente un axe "X" principal représenté verticalement à la figure. Elle présente un corps 6 cylindrique à paroi tubulaire fermé à l'une de ses extrémités axiales par un fond 8, et qui est ouvert à son autre extrémité par un col 10, lui aussi tubulaire. Le col 10 est délimité vers le bas par une collerette 12 et vers le haut par un bord d'extrémité supérieur appelé buvant 14.

Le col 10 présente généralement sa forme définitive tandis que le corps 6 de la préforme est destiné à subir une déformation relativement importante pour former le récipient 2 final lors d'une étape de formage.

Comme représentée à la figure 1, l'installation 1 de fabrication de récipients comprend au moins une unité de conditionnement thermique 16, une unité de formage 18 et un manipulateur 20.

L'unité de conditionnement thermique 16 aussi appelée four permet de chauffer une succession de préformes à une température de référence. La température de référence est choisie pour que le corps de chaque préforme en sortie d'unité de conditionnement thermique 16 soit dans un état malléable permettant une déformation du corps 6 de la préforme chauffée afin de former le récipient 2 dans l'unité de formage. La température de référence est comprise entre la température de transition vitreuse et la température de cristallisation de la matière plastique de la préforme. Dans le cas du PET, la température de référence est par exemple, voisine de 110°. La valeur de la température de référence peut varier en fonction du produit avec lequel le récipient va être rempli ou en fonction de la technique de remplissage du récipient. Ainsi, la température de référence est différente pour un remplissage à chaud ou pour un produit carbonaté par exemple.

Selon le mode de réalisation représenté sur la Figure 1, l'unité de conditionnement thermique 16 est un four à défilement, dans lequel les préformes 4 sont transportées pour être exposées à une pluralité de sources de rayonnement 22 de chauffage.

A cet effet, l'unité de conditionnement thermique 16 comprend un moyen de convoyage 24 des préformes circulant le long d'un bâti 23 au travers de l'unité de conditionnement thermique selon un trajet de chauffage s'étendant entre une entrée 25 et une sortie 27 de l'unité de conditionnement thermique définissant une trajectoire T.

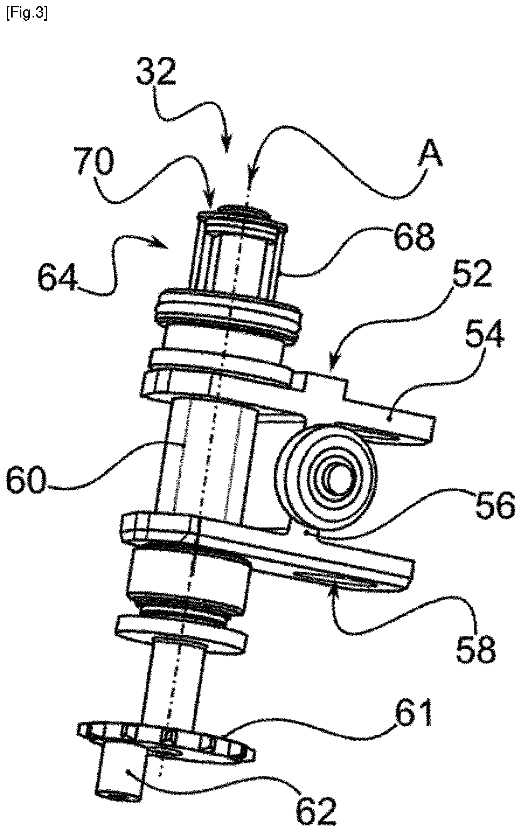

Comme représenté aux Figures 1 et 3, le moyen de convoyage 24 comprend une succession de dispositifs de convoyage 26, chacun étant apte à supporter une préforme, montés sur une chaîne 28, se déplaçant le long du trajet de chauffe, c'est-à-dire entre l'entrée et sortie des préformes dans l'unité de conditionnement thermique. La chaîne circule sur des roues 30 dont au moins une est motorisée. Dans un autre mode de réalisation non représenté, le moyen de convoyage comprend par exemple une succession de dispositifs de préhension, chacun étant apte à supporter une préforme, montés sur une navette de type moteur linéaire circulant sur une boucle fermée magnétique. Le mouvement de chacune de ces navettes étant commandé indépendamment les unes des autres par une unité de contrôle (non représentée sur les figures).

Chaque dispositif de convoyage 26 est, par exemple, apte à recevoir une préforme par emmanchement du col sur une tournette 32. Chaque tournette 32 est, par exemple, mobile en rotation par rapport à la chaîne autour d'un axe A de rotation confondu avec l'axe principal X d'une préforme lorsque celle-ci est supportée par la tournette.

Le four comprend également une cavité de chauffe qui comprend deux parois latérales 36 face à face et au moins l'une de ces parois étant celle qui supporte plusieurs sources de rayonnement 22, disposées les unes au-dessus des autres et les unes à côté des autres en regard des préformes.

En d'autres termes, l'unité de conditionnement thermique 16 comprend une pluralité de sources de rayonnement 22 réparties le long du trajet de la trajectoire T et selon une hauteur correspondant sensiblement à la hauteur des préformes de sorte que toute la hauteur du corps de chaque préforme est exposée aux sources de rayonnement sur le trajet de la préforme dans l'unité de conditionnement thermique. En faisant tourner les préformes autour de leur axe principal X, les tournettes 32 permettent d'exposer uniformément tout le corps 6 des préformes aux sources de rayonnement 22. Dans ce mode de réalisation particulier, les sources de rayonnement 22 sont réparties sur un côté seulement de ce trajet, et une paroi réfléchissante 38 est disposée de l'autre côté du trajet de chauffage pour réfléchir la chaleur vers les préformes.

Dans un autre mode de réalisation non représentée, les sources de rayonnement 22 peuvent être réparties de part et d'autre du trajet de chauffage sans pour autant sortir du cadre de l'invention.

Il convient également de noter que les sources de rayonnement 22 sont agencées, le cas échéant, pour ne pas soumettre le col 10 à la chaleur émise par les sources de rayonnement. En effet, comme indiqué précédemment, seul le corps 6 de la préforme 4 est chauffé pour produire le récipient. Par conséquent, le col 10 ne doit pas être déformé au cours du formage et ne doit pas être chauffé. Pour éviter le chauffage du col 10, le four peut comprendre un dispositif de ventilation positionné au droit des cols pour évacuer la chaleur susceptible d'être absorbée par les cols. Chaque source de rayonnement 22 est formée par une lampe à incandescence émettant un rayonnement infrarouge.

Dans un autre mode de réalisation, chaque source de rayonnement est une diode laser émettant un rayonnement infrarouge.

En d'autres termes, chaque source de rayonnement 22 est un laser (par exemple des diodes laser) émettant dans l'infrarouge et organisés par juxtaposition et/ou superposition pour former une ou plusieurs matrices.

Dans un autre mode de réalisation, chaque source de rayonnement 22 est un générateur de micro-ondes.

Il est bien évident que les sources de rayonnement 22 pourront consister dans toute source de rayonnement bien connue de l'Homme du Métier, ou une combinaison de ces sources de rayonnement sans pour autant sortir du cadre de l'invention.

Puis, une fois que la préforme 4 a été conditionnée thermiquement dans l'unité de conditionnement thermique 16, elle est transférée à l'unité de formage 18 pour y être formée.

L'unité de formage 18 de récipients 2 à partir de préformes 4 se compose d'une roue de formage 42 déplaçant en rotation une pluralité de postes de formage 44 d'une entrée à une sortie, à laquelle une succession de récipients sont formés à partir des préformes, puis sont extraites, comme représentée sur la Fig. 1. L'axe de rotation de la roue de formage est, par exemple, sensiblement parallèle à l'axe principal X des préformes lorsqu'elles sont transportées par la roue de formage. Chaque poste de soufflage 44 comprend un moule 46 formant une cavité de moulage présentant la forme du récipient à former et agencé pour recevoir une préforme de façon que le corps de la préforme s'étende dans la cavité de moulage. L'installation de fabrication 1 de récipients comprend également un manipulateur 20 pourvu d'un bras robotisé 48 équipé à l'une de ses extrémités d'une pince 50 de démontage de tournettes 32. L'ensemble du bras robotisé et de la pince est mobile au moins partiellement à l'aplomb du four, de manière à assurer le démontage des tournettes 32.

Comme représenté à la figures 3, le dispositif de convoyage 26 comprend un support 52, aussi appelé maillon sur la figure, qui est intégré à une chaîne qui comprend une multitude de tels maillons.

Dans ce mode de réalisation, le maillon, de préférence métallique (par ex. en acier), comprend deux branches 54, superposées, qui font saillie latéralement d'une âme 56. Les branches sont percées de trous 58 coaxiaux qui définissent conjointement un axe principal.

Le dispositif de convoyage 26 comprend par ailleurs :
- un mandrin 60 (visible en pointillé sur la figure 3) d'axe de révolution monté dans les trous 58 du maillon suivant une liaison à pivot glissant par rapport au maillon. Ainsi, l'axe principal des trous et l'axe de révolution du mandrin 60 sont coaxiaux ;
- un organe 61 d'entraînement solidaire en rotation à l'une des extrémités libres du mandrin 60. Dans ce mode de réalisation, l'organe 61 d'entrainement est un pignon qui est avantageusement formé sur un embout en forme de bobine, emmanché en force sur le mandrin 60 ;
- un suiveur de came 62, ici un galet, solidarisé à l'organe 61 d'entrainement, ledit suiveur de came étant décentré par rapport à l'axe longitudinal du mandrin 60 pour pré-orienter angulairement chaque mandrin 60. En variante, le suiveur de came 62 peut être un doigt ;
- une tournette 32 montée sur l'autre extrémité du mandrin 60 et qui comprend au moins :
- un nez de tournette 64 qui est fixé au mandrin 60 de manière démontable, en l'espèce par l'intermédiaire d'un moyen de fixation qui sera décrit ultérieurement. Le nez de tournette 64 est destiné à recevoir le col de la préforme ;
- un éjecteur 68 solidarisé au support 52. Cet éjecteur 68 a une forme sensiblement cylindrique et comprend à l'une de ses extrémités au moins une face 70 dite d'éjection de la préforme ;

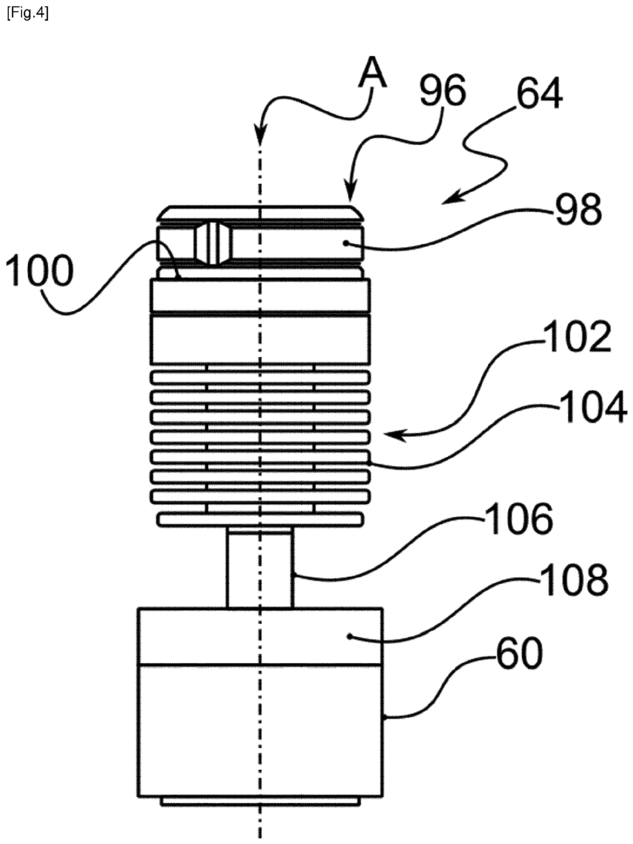

Le mandrin 60 et le nez de tournette 64 s'étendent coaxialement à l'éjecteur de telle manière que l'extrémité libre du nez de tournette 64 fasse saillie de l'éjecteur. Comme représentée à la figure 4, le nez de tournette 64 comprend une tête 96 cylindrique d'axe "A" vertical dont le diamètre extérieur est légèrement inférieur au diamètre intérieur du col 10 de manière qu'il subsiste un jeu radial de coulissement entre la tête et le col 10 lorsque la tête est emmanchée dans le col 10.

La tête 96 comporte des bagues 98 qui se présentent sous la forme de secteurs d'anneau. Chaque bague 98 est reçue coulissante radialement dans un logement radial de la tête 96 entre :
- une position rétractée vers l'axe "A" de la tête 96 permettant le coulissement vertical de la tournette par rapport au col 10 de la préforme 4 ;
- une position d'expansion radiale dans laquelle elles sont susceptibles d'être serrées contre la face cylindrique interne du col 10 pour retenir la préforme 4 par frottement.

Les bagues 98 sont contraintes élastiquement vers leur position d'expansion au moyen d'un anneau élastique qui est intercalé radialement entre le fond du logement réalisé dans la tête 96 et la bague 98.

La tête 96 est délimitée verticalement vers le bas par un tronçon de plus grand diamètre délimitant une face annulaire d'épaulement 100 qui est tournée vers le haut et qui forme une face de positionnement contre laquelle le buvant 14 est reçu en butée verticale lors de l'emmanchement de la tête 96 dans le col 10.

Un radiateur 102 est agencé sous la tête 96 et comprend des ailettes 104 qui présentent une forme globalement cylindrique d'axe vertical A principal, coaxial avec l'axe A de la tête 96 et dont le diamètre est équivalent au diamètre du tronçon de plus grand diamètre que la tête 96.

Une tige 106 est fixé à l'une de ces extrémités à l'ensemble radiateur 102 et tête 96, alors que l'autre extrémité de la tige 106 est fixée au mandrin 60 de manière démontable, en l'espèce par l'intermédiaire d'un moyen de fixation 108 qui sera décrit ultérieurement.

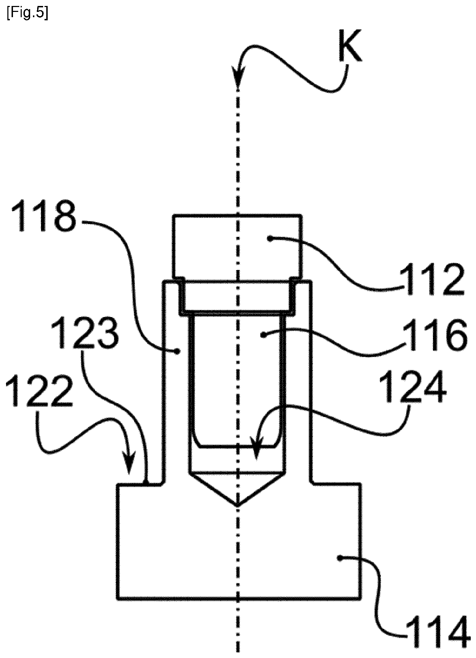

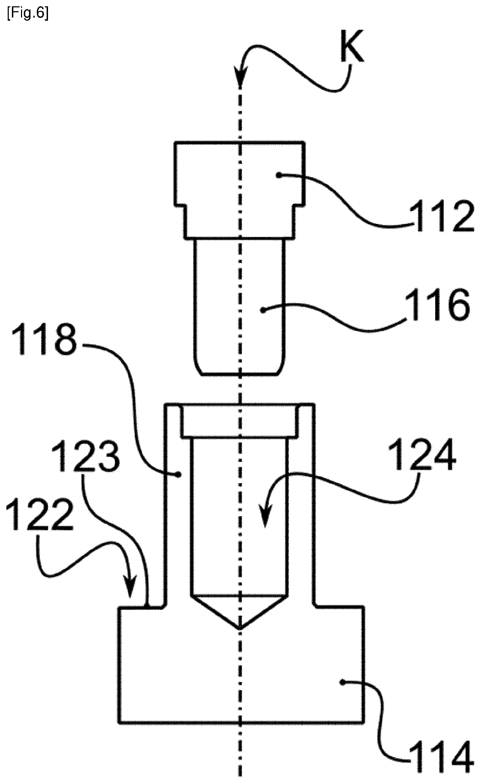

Les figures 5 et 6 représentent le moyen de fixation 108 par vissage pour solidariser le mandrin 60 au nez de tournette 64. La figure 5 illustre le moyen de fixation 108 dans une position de verrouillage et la figure 6 illustre le moyen de fixation 108 dans une position de libération.

Le moyen de fixation 108 comprend une partie mâle 112 solidaire du nez de tournette ou du mandrin et une partie femelle 114 solidaire du mandrin ou du nez de tournette.

La partie mâle 112 a la forme d'un cylindre présentant un filetage 116 à l'un de ces extrémités libres susceptible de s'insérer dans la partie femelle 114.

Le partie femelle 114 comprend une cage 118 périphérique.

La cage 118 périphérique a la forme d'un cylindre d'axe K alésé en son centre, et à l'une de ces extrémités, la cage 118 périphérique se prolonge radialement pour définir un épaulement 122 définissant une surface 123 dite « supérieure ».

La cage 118 périphérique comprend sur sa paroi interne un taraudage 124 fileté complémentaire au filetage 116 de la partie mâle 112.

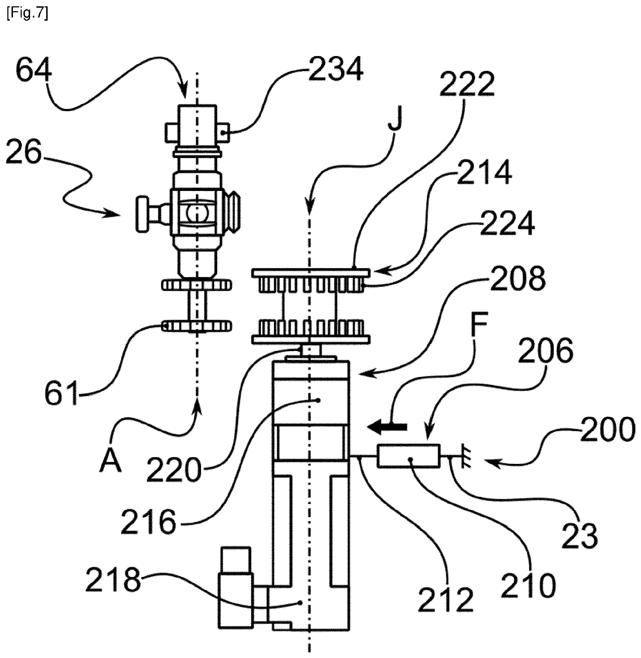

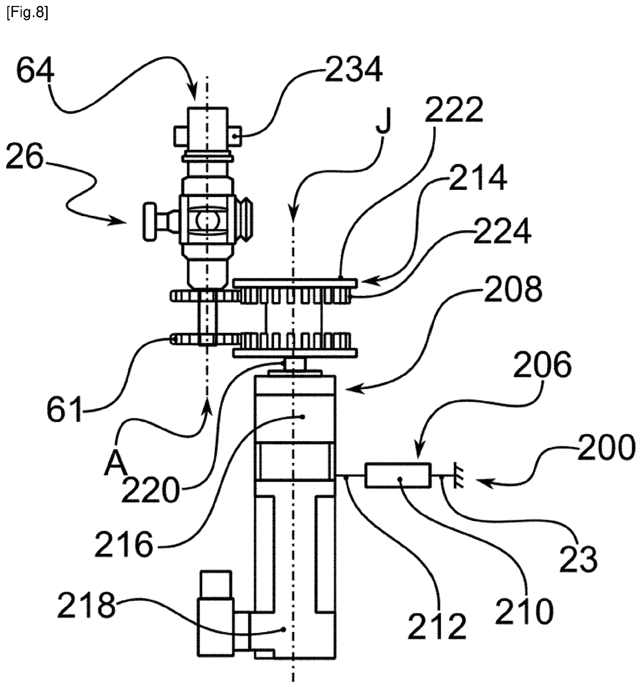

Les figures 7 et 8 illustrent une vue d'ensemble d'un dispositif pour le verrouillage et/ou pour le déverrouillage 200 d'au moins un nez de tournette équipant un dispositif de convoyage 26 positionné sur le trajet de chauffe de l'unité de conditionnement thermique 16, c'est-à-dire au niveau des roues 30 ou au niveau des parois latérales 36.

Le dispositif pour le verrouillage et/ou pour le déverrouillage 200 est solidaire du bâti 23 de l'unité de conditionnement thermique.

Dans le mode de réalisation illustré aux figures 7 et 8, le dispositif pour le verrouillage et/ou pour le déverrouillage 200 comprend un premier actionneur 206 de positionnement et un moyen de verrouillage 208.

Le premier actionneur 206 est vérin hydraulique ou pneumatique ou tous autres actionneurs capables de déplacer le moyen de verrouillage 208 suivant une direction horizontale.

Le vérin 206 constitué d'un corps 210 fixé au bâti 23 et d'un piston 212 mobile en translation suivant la direction horizontale suivant la flèche F et solidarisé au moyen de verrouillage.

Le moyen de verrouillage 208 comprend un organe de verrouillage et/ou déverrouillage 214 solidaire d'un second actionneur 216 monté apte à mettre en rotation le moyen de fixation 108 depuis sa position de verrouillage jusqu'à sa position de libération.

Le second actionneur 216 est un moteur capable de mettre en rotation l'organe de verrouillage et/ou déverrouillage 214 suivant une direction verticale d'axe J.

Le moteur 216 se constitue d'un corps 218 solidarisé au piston 212 du vérin constituant le premier actionneur 206 et d'un arbre 220 sur lequel est solidarisé l'organe de verrouillage et/ou déverrouillage 214 pour le mettre en rotation. L'organe de verrouillage et/ou déverrouillage 214 est positionné au droit de l'organe 61 d'entrainement du dispositif de convoyage 26 pour le mettre en rotation. L'organe de verrouillage et/ou déverrouillage 214 se constitue d'au moins une roue 222 se trouvant dans un plan horizontal comprenant à sa périphérie des doigts 224 espacés d'un certain pas.

Dans le cas où l'organe 61 d'entrainement se constitue d'un pignon, le pas entre chaque doigt 224 se définit de façon que les doigts s'insèrent entre chaque dent du pignon.

Les figures 7 et 8 représentent la cinématique du dispositif pour le verrouillage et/ou pour le déverrouillage 200 d'au moins un nez de tournette 64 par rapport au dispositif de convoyage 26.

La figure 7 illustre une vue d'ensemble d'un dispositif pour le verrouillage et/ou pour le déverrouillage 200 d'au moins un nez de tournette 64 dans une position de production.

La position de production signifie que le dispositif pour le verrouillage et/ou pour le déverrouillage 200 n'est pas mise en oeuvre et par conséquent, l'installation de production de récipients est en mesure de produire des récipients.

Le premier actionneur 206 est rétracté et le second actionneur 216 n'est pas mis en rotation.

La figure 8 illustre une vue d'ensemble d'un dispositif pour le verrouillage et/ou pour le déverrouillage 200 d'au moins un nez de tournette 64 mis en position de libération.

La position de libération signifie que le dispositif pour le verrouillage et/ou pour le déverrouillage 200 est positionné pour réaliser l'opération de libération du moyen de fixation 108, c'est-à-dire que le second actionneur 216 met en rotation l'organe de verrouillage et/ou déverrouillage 214 par rapport à l'axe J. Par conséquent, l'organe de verrouillage et/ou déverrouillage 214 met en rotation l'organe 61 d'entrainement qui a été au préalable bloqué par un moyen de blocage 234. Ainsi, la rotation de l'organe de verrouillage et/ou déverrouillage 214 engendre la rotation de l'organe 61 d'entrainement et par voie de conséquence la rotation du mandrin 60 qui désolidarise le mandrin du nez de tournette 64, c'est-à-dire, la partie male 112 de la partie femelle 114 constituant le moyen de fixation 108.

Le dispositif pour le verrouillage et/ou pour le déverrouillage 200 comprend également un moyen de blocage 234 solidaire du bâti 23 de l'unité de conditionnement thermique 16, ou à l'extérieur de l'unité de conditionnement thermique comme cela est représenté à la figure 1 par le bras robotisé 48.

Le moyen de blocage 234 comprend une pince 50 constituée de deux branches, mobiles l'une par rapport à l'autre, chaque branche étant munie à son extrémité libre d'un mors apte à saisir le nez de tournette 64 pour l'immobiliser en rotation.

Cette pince 50 est montée sur le bras 48 robotisé comme représenté sur la figure 1. En variante, le moyen de blocage 234 comprend un vérin constitué d'un corps fixé au bâti 23 et d'un piston apte à être déplacé pour prendre appui sur le nez de tournette 64 pour le maintenir. Ce mode de réalisation n'est pas représenté sur les figures.

La cinématique du dispositif pour le verrouillage et/ou pour le déverrouillage 200 est commandée par une unité de commande de l'installation de production de récipients (non représentée).

L'unité de commande contrôle le couple généré par le second actionneur 216 pour s'assurer que le verrouillage et/ou le déverrouillage soient correctement effectués.

## Revendications

1. Dispositif pour le verrouillage et/ou le déverrouillage (200) d'au moins un nez de tournette (64), destiné à être monté sur une unité de conditionnement thermique (16) comportant au moins:
- un bâti (23) ;
- un dispositif de convoyage (26) de préformes comportant un support (52), ledit dispositif de convoyage (26) circulant le long du bâti (23) selon une trajectoire (T) prédéterminée ;
- un mandrin (60) monté mobiles en rotation autour de son axe longitudinal, sur le support du dispositif de convoyage,
chaque mandrin (60) comprenant au moins :
- une première extrémité munie d'un moyen de fixation (108) solidarisant le nez de tournette (64) au mandrin (60), ledit nez de tournette étant apte à recevoir la préforme en matière plastique ;
- une autre portion du mandrin (60), opposée à ladite première extrémité, solidarisée à un organe (61) d'entraînement pour mettre en rotation ledit mandrin (60), **caractérisé en ce que** le dispositif pour le verrouillage et/ou le déverrouillage (200) comprend en outre :
- un moyen de blocage (234) en rotation de chaque nez de tournette (64), et
- un moyen de verrouillage et/ou déverrouillage (208) dudit moyen de fixation (108) solidarisant le nez de tournette (64) au mandrin (60) de manière à verrouiller et/ou à déverrouiller le nez de tournette (64) du mandrin (60).

2. Dispositif pour le verrouillage et/ou le déverrouillage (200) d'au moins un nez de tournette selon la revendication 1 **caractérisé en ce que** ledit moyen de fixation comprend une partie mâle (112) solidaire dudit nez de tournette et une partie femelle (114) solidaire dudit mandrin, ladite partie mâle (112) présentant un filetage (116) à l'une de ces extrémités et ladite partie femelle (114) comprenant un taraudage (124) fileté complémentaire au filetage (116) de la partie mâle (112).

3. Dispositif pour le verrouillage et/ou le déverrouillage (200) d'au moins un nez de tournette selon la revendication 1 **caractérisé en ce que** ledit moyen de fixation comprend une partie femelle (114) solidaire dudit nez de tournette et une partie male solidaire dudit mandrin, ladite partie mâle (112) présentant un filetage (116) à l'une de ses extrémités, ladite partie femelle (114) comprenant un taraudage (124) fileté complémentaire au filetage (116) de la partie mâle (112).

4. Dispositif pour le verrouillage et/ou le déverrouillage (200) d'au moins un nez de tournette selon la revendication 1 **caractérisé en ce que** ledit moyen de verrouillage et/ou déverrouillage (208) étant solidarisé audit bâti (23) de l'unité de conditionnement thermique (16).

5. Dispositif pour le verrouillage et/ou le déverrouillage (200) d'au moins un nez de tournette selon l'une quelconque des revendications précédentes **caractérisé en ce que** ledit moyen de blocage (234) comprend une pince (50) constituée de deux branches, mobiles l'une par rapport à l'autre, chaque branche étant munie à son extrémité libre d'un mors apte à saisir le nez de tournette (64) pour l'immobiliser en rotation.

6. Dispositif pour le verrouillage et/ou le déverrouillage (200) d'au moins un nez de tournette selon la revendication précédente **caractérisé en ce que** la pince (50) est montée sur un bras robotisé (48).

7. Dispositif pour le verrouillage et/ou le déverrouillage (200) d'au moins un nez de tournette selon l'une quelconque des revendications 5 ou 6 **caractérisé en ce que** au moins une branche de la pince est entrainée par un actionneur.

8. Dispositif pour le verrouillage et/ou le déverrouillage (200) d'au moins un nez de tournette selon la revendication 1, **caractérisé en ce que** ledit moyen de blocage (234) comprend un vérin constitué d'un corps fixé au bâti (23) et d'un piston apte à être déplacé pour prendre appui sur le nez de tournette (64) pour l'immobiliser en rotation.

9. Dispositif pour le verrouillage et/ou le déverrouillage (200) d'au moins un nez de tournette selon l'une quelconque des revendications 1 à 7 caractérisé en ce le moyen de verrouillage et/ou de déverrouillage (208) comporte un second actionneur (216) muni d'un organe de déverrouillage et/ou verrouillage (214) dudit moyen de fixation (108) destiné à coopérer avec l'organe (61) d'entraînement pour mettre en rotation ledit mandrin (60) et ainsi déverrouiller et/ou verrouiller le moyen de fixation.

10. Dispositif pour le verrouillage et/ou le déverrouillage (200) d'au moins un nez de tournette selon la revendication précédente **caractérisé en ce que** l'organe de verrouillage et/ou de déverrouillage (214) comprend au moins une roue (222) se trouvant dans un plan horizontal, comportant à sa périphérie des doigts (224) espacés d'un certain pas.

11. Dispositif pour le verrouillage et/ou le déverrouillage (200) d'au moins un nez de tournette selon la revendication précédente **caractérisé en ce que** ledit pas entre chaque doigt (224) se définit de façon que les doigts (224) s'insèrent entre chaque dent dudit organe (61) d'entraînement solidaire en rotation à l'une des extrémités libres du mandrin (60).

12. Unité de conditionnement thermique de préformes **caractérisée en ce qu'**elle comporte un dispositif pour le verrouillage et/ou le déverrouillage (200) d'au moins un nez de tournette selon l'une quelconque des revendications 1 à 11 solidarisé au bâti (23) de ladite unité de conditionnement thermique de préformes.

13. Unité de conditionnement thermique selon la revendication précédente **caractérisée en ce qu'**elle comprend au moins un premier actionneur (206) apte à déplacer ledit moyen de verrouillage et/ou de déverrouillage (208) depuis une position dite active dans laquelle ledit moyen de verrouillage et/ou de déverrouillage (208) s'étendent sur la trajectoire T jusqu'à une position dite inactive dans laquelle ledit moyen de verrouillage et/ou de déverrouillage (208) ne s'étendent pas sur la trajectoire T et inversement.

14. Procédé pour le verrouillage et/ou le déverrouillage du nez de tournette d'une unité de conditionnement thermique selon l'une quelconque des revendications 12 ou 13 comportant au moins les étapes suivantes de :
- blocage de nez de tournette (64) ;
- mise en rotation du mandrin (60) pour engager et désengager ledit moyen de fixation solidarisant le nez de tournette (64) avec le mandrin (60).

## Patentansprüche

1. Vorrichtung zum Verriegeln und/oder Entriegeln (200) mindestens einer Spindelnase (64), die dazu bestimmt ist, an einer Einheit zur thermischen Konditionierung (16) montiert zu werden, umfassend mindestens:
- ein Gestell (23);
- eine Fördervorrichtung (26) für Vorformlinge, die einen Halter (52) umfasst, wobei die Fördervorrichtung (26) entlang des Gestells (23) gemäß einer vorbestimmten Bahn (T) umläuft;
- einen Dorn (60), der um seine Längsachse drehbeweglich an dem Halter der Fördervorrichtung montiert ist,
wobei jeder Dorn (60) mindestens umfasst:
- ein erstes Ende, das mit einem Fixierungsmittel (108) versehen ist, das die Spindelnase (64) an dem Dorn (60) befestigt, wobei die Spindelnase in der Lage ist, den Vorformling aus Kunststoff aufzunehmen;
- einen weiteren Abschnitt des Dorns (60), der zu dem ersten Ende entgegengesetzt ist und an einem Antriebselement (61) zum Drehen des Dorns (60) befestigt ist,
**dadurch gekennzeichnet, dass** die Vorrichtung zum Verriegeln und/oder Entriegeln (200) ferner umfasst:
- ein Mittel zum Drehblockieren (234) jeder Spindelnase (64), und
- ein Mittel zum Verriegeln und/oder Entriegeln (208) des Fixierungsmittels (108), das die Spindelnase (64) an dem Dorn (60) befestigt, so dass die Spindelnase (64) des Dorns (60) verriegelt und/oder entriegelt wird.

2. Vorrichtung zum Verriegeln und/oder Entriegeln (200) mindestens einer Spindelnase nach Anspruch 1, **dadurch gekennzeichnet, dass** das Fixierungsmittel einen integral mit der Spindelnase ausgebildeten männlichen Teil (112) und einen integral mit dem Dorn ausgebildeten weiblichen Teil (114) umfasst, wobei der männliche Teil (112) an einem seiner Enden ein Außengewinde (116) aufweist und wobei der weibliche Teil (114) ein Innengewinde (124) aufweist, das komplementär zu dem Außengewinde (116) des männlichen Teils (112) ist.

3. Vorrichtung zum Verriegeln und/oder Entriegeln (200) mindestens einer Spindelnase nach Anspruch 1, **dadurch gekennzeichnet, dass** das Fixierungsmittel einen integral mit der Spindelnase ausgebildeten weiblichen Teil (114) und einen integral mit dem Dorn ausgebildeten männlichen Teil umfasst, wobei der männliche Teil (112) an einem seiner Enden ein Außengewinde (116) aufweist, wobei der weibliche Teil (114) ein Innengewinde (124) aufweist, das komplementär zu dem Außengewinde (116) des männlichen Teils (112) ist.

4. Vorrichtung zum Verriegeln und/oder Entriegeln (200) mindestens einer Spindelnase nach Anspruch 1, **dadurch gekennzeichnet, dass** das Mittel zum Verriegeln und/oder Entriegeln (208) an dem Gestell (23) der Einheit zur thermischen Konditionierung befestigt (16) ist.

5. Vorrichtung zum Verriegeln und/oder Entriegeln (200) mindestens einer Spindelnase nach einem der vorhergehenden Ansprüche, **dadurch gekennzeichnet, dass** das Mittel zum Blockieren (234) eine Zange (50) umfasst, die aus zwei relativ zueinander beweglichen Schenkeln besteht, wobei jeder Schenkel an seinem freien Ende mit einer Backe versehen ist, die in der Lage ist, die Spindelnase (64) zu erfassen, um sie drehfest zu fixieren.

6. Vorrichtung zum Verriegeln und/oder Entriegeln (200) mindestens einer Spindelnase nach dem vorhergehenden Anspruch, **dadurch gekennzeichnet, dass** die Zange (50) an einem Roboterarm (48) montiert ist.

7. Vorrichtung zum Verriegeln und/oder Entriegeln (200) mindestens einer Spindelnase nach einem der Ansprüche 5 oder 6, **dadurch gekennzeichnet, dass** mindestens ein Schenkel der Zange von einem Aktor angetrieben wird.

8. Vorrichtung zum Verriegeln und/oder Entriegeln (200) mindestens einer Spindelnase nach Anspruch 1, **dadurch gekennzeichnet, dass** das Mittel zum Blockieren (234) einen Zylinder umfasst, der aus einem an dem Gestell (23) fixierten Körper besteht und aus einem Kolben, der in der Lage ist, verlagert zu werden, um an der Spindelnase (64) zur Anlage zu kommen, um sie drehfest zu fixieren.

9. Vorrichtung zum Verriegeln und/oder Entriegeln (200) mindestens einer Spindelnase nach einem der Ansprüche 1 bis 7, **dadurch gekennzeichnet, dass** das Mittel zum Verriegeln und/oder Entriegeln (208) einen zweiten Aktor (216) umfasst, der mit einem Element zum Entriegeln und/oder Verriegeln (214) des Fixierungsmittels (108) versehen ist, das dazu bestimmt ist, mit dem Antriebselement (61) zusammenzuwirken, um den Dorn (60) zu drehen und so das Fixierungsmittel zu entriegeln und/oder zu verriegeln.

10. Vorrichtung zum Verriegeln und/oder Entriegeln (200) mindestens einer Spindelnase nach dem vorhergehenden Anspruch, **dadurch gekennzeichnet, dass** das Element zum Verriegeln und/oder Entriegeln (214) mindestens ein in einer horizontalen Ebene liegendes Rad (222) umfasst, das an seinem Umfang Finger (224) umfasst, die um eine bestimmte Teilung beabstandet sind.

11. Vorrichtung zum Verriegeln und/oder Entriegeln (200) mindestens einer Spindelnase nach dem vorhergehenden Anspruch, **dadurch gekennzeichnet, dass** die Teilung zwischen jedem Finger (224) so definiert ist, dass die Finger (224) zwischen jeden Zahn des Antriebselements (61) eingeführt werden, das drehfest an einem der freien Enden des Dorns (60) befestigt ist.

12. Einheit zur thermischen Konditionierung von Vorformlingen, **dadurch gekennzeichnet, dass** sie eine Vorrichtung zum Verriegeln und/oder Entriegeln (200) mindestens einer Spindelnase nach einem der Ansprüche 1 bis 11 umfasst, die an dem Gestell (23) der Einheit zur thermischen Konditionierung von Vorformlingen befestigt ist.

13. Einheit zur thermischen Konditionierung nach dem vorhergehenden Anspruch, **dadurch gekennzeichnet, dass** sie mindestens einen ersten Aktor (206) umfasst, der in der Lage ist, das Mittel zum Verriegeln und/oder Entriegeln (208) aus einer sogenannten aktiven Stellung, in der sich das Mittel zum Verriegeln und/oder Entriegeln (208) auf der Bahn T erstreckt, bis zu einer sogenannten inaktiven Stellung, in der sich das Mittel zum Verriegeln und/oder Entriegeln (208) nicht auf der Bahn T erstreckt, und umgekehrt zu verlagern.

14. Verfahren zum Verriegeln und/oder Entriegeln der Spindelnase einer Einheit zur thermischen Konditionierung nach einem der Ansprüche 12 oder 13, umfassend mindestens die folgenden Schritte:
- Blockieren der Spindelnase (64);
- Drehen des Dorns (60), um das Fixierungsmittel, das die Spindelnase (64) an dem Dorn (60) befestigt, in und außer Eingriff zu bringen.

## Claims

1. Device for locking and/or unlocking (200) at least one spinner nose (64), intended to be mounted on a thermal conditioning unit (16) comprising at least:
- a frame (23);
- a preform conveying device (26) comprising a support (52), said conveying device (26) travelling along the frame (23) along a predetermined path (T);
- a mandrel (60) mounted rotatably about its longitudinal axis, on the support of the conveying device,
each mandrel (60) comprising at least:
- a first end provided with an attachment means (108) rigidly securing the spinner nose (64) to the mandrel (60), said spinner nose being capable of receiving the plastic preform;
- another portion of the mandrel (60), opposite said first end, rigidly secured to a drive member (61) for rotating said mandrel (60),
**characterized in that** the locking and/or unlocking device (200) further comprises:
- a means for blocking (234) each spinner nose (64) in rotation, and
- a means for locking and/or unlocking (208) said attachment means (108) rigidly securing the spinner nose (64) to the mandrel (60) in such a way as to lock and/or unlock the spinner nose (64) with respect to the mandrel (60).

2. Device for locking and/or unlocking (200) at least one spinner nose according to Claim 1, **characterized in that** said attachment means comprises a male part (112) rigidly secured to said spinner nose and a female part (114) rigidly secured to said mandrel, said male part (112) having a thread (116) at one of its ends and said female part (114) comprising a threaded bore (124) complementary to the thread (116) of the male part (112).

3. Device for locking and/or unlocking (200) at least one spinner nose according to Claim 1, **characterized in that** said attachment means comprises a female part (114) rigidly secured to said spinner nose and a male part rigidly secured to said mandrel, said male part (112) having a thread (116) at one of its ends, said female part (114) comprising a threaded bore (124) complementary to the thread (116) of the male part (112).

4. Device for locking and/or unlocking (200) at least one spinner nose according to Claim 1, **characterized in that** said locking and/or unlocking means (208) is rigidly secured to said frame (23) of the thermal conditioning unit (16).

5. Device for locking and/or unlocking (200) at least one spinner nose according to any one of the preceding claims, **characterized in that** said blocking means (234) comprises a clamp (50) consisting of two branches, movable relative to one another, each branch being provided at its free end with a jaw capable of gripping the spinner nose (64) to immobilize it in rotation.

6. Device for locking and/or unlocking (200) at least one spinner nose according to the preceding claim, **characterized in that** the clamp (50) is mounted on a robotic arm (48).

7. Device for locking and/or unlocking (200) at least one spinner nose according to either of Claims 5 and 6, **characterized in that** at least one branch of the clamp is driven by an actuator.

8. Device for locking and/or unlocking (200) at least one spinner nose according to Claim 1, **characterized in that** said blocking means (234) comprises a cylinder consisting of a body attached to the frame (23) and a piston adapted to be moved to bear on the spinner nose (64) to immobilize it in rotation.

9. Device for locking and/or unlocking (200) at least one spinner nose according to any one of Claims 1 to 7, **characterized in that** the locking and/or unlocking means (208) comprises a second actuator (216) provided with a member for unlocking and/or locking (214) said attachment means (108) intended to interact with the drive member (61) to rotate said mandrel (60) and thus unlock and/or lock the attachment means.

10. Device for locking and/or unlocking (200) at least one spinner nose according to the preceding claim, **characterized in that** the locking and/or unlocking member (214) comprises at least one wheel (222) located in a horizontal plane, comprising at its periphery fingers (224) spaced apart by a certain pitch.

11. Device for locking and/or unlocking (200) at least one spinner nose according to the preceding claim, **characterized in that** said pitch between each finger (224) is defined such that the fingers (224) are inserted between each tooth of said drive member (61) which rotates as one with one of the free ends of the mandrel (60).

12. Preform thermal conditioning unit **characterized in that** it comprises a device for locking and/or unlocking (200) at least one spinner nose according to any one of Claims 1 to 11, rigidly secured to the frame (23) of said preform thermal conditioning unit.

13. Thermal conditioning unit according to the preceding claim, **characterized in that** it comprises at least one first actuator (206) capable of moving said locking and/or unlocking means (208) from a position referred to as the active position, in which said locking and/or unlocking means (208) extends on the path T, to a position referred to as the inactive position, in which said locking and/or unlocking means (208) does not extend on the path T, and vice versa.

14. Method for locking and/or unlocking the spinner nose of a thermal conditioning unit according to either of Claims 12 and 13, comprising at least the following steps:
- blocking the spinner nose (64);
- rotating the mandrel (60) to engage and disengage said attachment means rigidly securing the spinner nose (64) to the mandrel (60).
